# EUROPÄISCHE PATENTSCHRIFT

(11) **EP 0 726 107 B1**
(45) Veröffentlichungstag und Bekanntmachung des Hinweises auf die Patenterteilung: **12.07.2000**
(21) Anmeldenummer: 96106597.6
(22) Anmeldetag: 15.01.1993
(51) Int. Cl.: B21D 43/05

(54) **Transfereinrichtung zum Transport von grossflächigen Blechteilen in einer Transferpressenlinie**
Transfer device for transferring large metal sheets in a transfer press line
Dispositif de transfert pour le transfert de larges tôles dans une ligne de presse de transfert

(30) Priorität: 21.02.1992 DE 4201387; 15.01.1993 EP 93100538
(43) Veröffentlichungstag der Anmeldung: 14.08.1996
(62) Teilanmeldung aus: 93100538.3
(73) Patentinhaber: Umformtechnik ERFURT GmbH, D-99086 Erfurt (DE)
(72) Erfinder: Darr, Uwe, 99094 Erfurt (DE); Hartung, Wolfgang, 99094 Erfurt (DE); Zeidler, Rolf, 99326 Stadtilm (DE)

(56) Entgegenhaltungen:
- DE-A- 3 905 069
- DE-C- 3 843 975
- GB-A- 2 243 134
- JP-A- 2 295 620
- JP-A- 59 163 038
- US-A- 4 607 516
- PATENT ABSTRACTS OF JAPAN vol. 009, no. 014 (M-352), 22.Januar 1985 & JP-A-59 163038 (NISSAN JIDOSHA KK), 14.September 1984,
- PATENT ABSTRACTS OF JAPAN vol. 015, no. 069 (M-1083), 19.Februar 1991 & JP-A-02 295620 (NISSAN MOTOR CO LTD), 6.Dezember 1990,

## Beschreibung

Die Erfindung betrifft eine Transfereinrichtung zum Transport von großflächigen Blechteilen in einer Transferpressenlinie gemäß dem Oberbegriff des Patentanspruches 1.

Eine bekannte Pressenanlage dieser Art (DE-OS 39 05 069) besteht aus mehreren in geringem Abstand zueinander aufgestellten Pressen, deren Pressentische und Kopfstücke durch separate Pressenständer oder durch jeweils zwei benachbarten Pressen zugeordnete gemeinsame Pressenständer miteinander verbunden sind und die mittels Verbindungswellen von einem zentralen Antrieb synchron angetrieben werden.
Jede Presse enthält nur eine Arbeitsstufe. Im Ständerbereich zwischen zwei Arbeitsstufen ist jeweils eine Leerstufe vorgesehen, in der eine Lageorientierung der Blechteile in mehreren Freiheitsgraden möglich ist. Der Transport der Blechteile in bzw. aus der Presse sowie von einer Arbeitsstufe zur nächsten erfolgt mittels Saugertraversen, die an Laufwagen befestigt sind, welche ihrerseits in durch die gesamte Pressenanlage reichenden Tragschienen verschiebbar gelagert und über ein Kurvengetriebe vom Pressenantrieb angetrieben werden. Beim Werkzeugwechsel werden die Saugertraversen - von den Laufwagen gelöst - in Aufnahmen der Schiebetische abgelegt und gemeinsam mit den Werkzeugen aus der Presse ausgefahren.
Nachteilig wirkt sich bei dieser Lösung der erhebliche Aufwand für die Anordnung der Zwischenablagen zwischen den Werkzeugstufen und der damit verbundene erhöhte Raumbedarf für die Pressenanlage aus.

Bei einer anderen bekannten Lösung (DE-OS 38 27 985) wurde dieser Nachteil dadurch vermieden, daß nicht gekoppelte Tisch- und Kopfstückteile über einen gemeinsamen Ständer mit nur einem Zuganker für zwei benachbarte Arbeitsstationen verspannt sind und damit eine schmale Ausführung der Ständer zwecks Wegfall der Leerstufen bei geringfügig vergrößertem Transportschritt möglich ist. Mittel zur Lageorientierung der Blechteile in mehreren Freiheitsgraden entsprechend den Erfordernissen der einzelnen Werkzeugstufen - wie beispielsweise in den Leerstufen der erstgenannten Lösung - sind hierbei nicht vorgesehen.

Der Erfindung liegt das Problem zugrunde, eine Transfereinrichtung nach dem Oberbegriff des Patentanspruchs 1 so zu gestalten, daß bei einer in Teiletransportrichtung sehr kurzen Ausführung der Pressenlinie ohne Leerstufen eine bedarfsweise Lageorientierung der Blechteile zwischen den Werkzeugstufen möglich ist.

Erfindungsgemäß wird das durch die im Patentanspruch 1 beschriebenen Merkmale erreicht. Die Ansprüche 2 und 3 betreffen die weitere Ausgestaltung des Transfersystems.

Die Erfindung wird nachstehend an Ausführungsbeispielen näher erläutert. Die zugehörigen Zeichnungen zeigen:
- Fig. 1: eine Transferpressenlinie mit quer zur Teiletransportrichtung asymmetrisch angeordneten Pressen und einer Transfereinrichtung in der Vorderansicht,
- Fig. 2: den Schnitt A-A von Fig. 1,
- Fig. 3: den Schnitt B-B von Fig. 1,
- Fig. 4: den Ausschnitt "x" aus Fig. 2,
- Fig. 5: eine Transferpressenlinie mit quer zur Teiletransportrichtung hintereinander angeordneten Pressenständern und in der Raststellung vertikal geschwenkten Saugertraversen in der Vorderansicht,
- Fig. 6: den Schnitt C-C von Fig. 5 und
- Fig. 7: die ausschnittsweise Darstellung einer auf dem Oberwerkzeug abgelegten Saugertraverse.

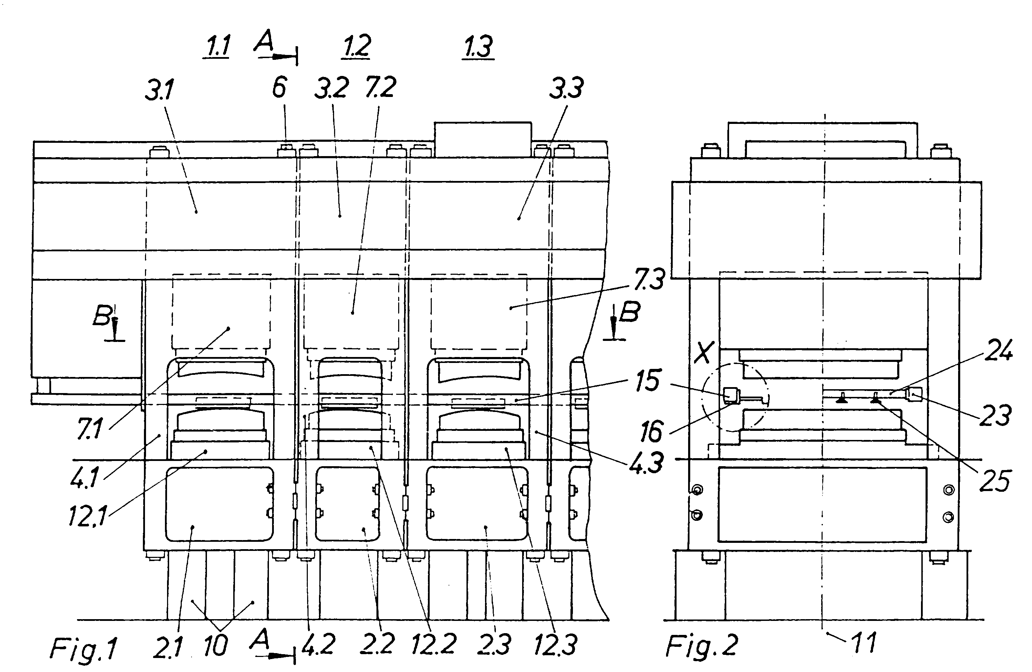

Die Transferpressenlinie (Fig. 1) besteht aus mehreren in Teiletransportrichtung hintereinander aufgestellten einzelnen Pressen, von denen nur die ersten drei Pressen 1.1-1.3 in der Zeichnung dargestellt wurden. Die Pressen 1.1-1.3 bestehen gestellseitig aus den Pressentischen 2.1-2.3, den Kopfstücken 3.1-3.3, den rechten Pressenständern 4.1-4.3 und den linken Pressenständern 5.1-5.3, die durch vorgespannte Zuganker 6 miteinander verbunden sind. Die Stößel 7.1-7.3 sind in den Stößelführungen 8 der Pressenständer 4.1-4.3, 5.1-5.3 vertikal verschiebbar gelagert und mittels je vier Pleuelstangen mit dem Getriebe verbunden. Die Getriebe aller Pressen 1.1-1.3 der Linie stehen über Verbindungswellen mit einem gemeinsamen Pressenantrieb in Wirkverbindung. Die Pressentische 2.1 und 2.2 bzw. 2.2 und 2.3 sind jeweils auf gemeinsamen Säulen 10 auf dem Fundament 11 gelagert.

Die Pressengestelle der einzelnen Pressen 1.1-1.3 sind asymmetrisch mit unterschiedlicher Ständerweite (l₁, l₂) in Durchlaufrichtung ausgeführt, wobei je Seite eine große (l₁) und eine kleine Ständerweite (l₂) von Stufe zu Stufe wechseln. Mit dieser Anordnung wird der durch die Pressenständer 4.1-4.3, 5.1-5.3 bedingte Freiraum zwischen den Pressen 1.1-1.3 minimiert und der erforderliche Transportschritt von Pressenstufe zu Pressenstufe gegenüber eng hintereinander angeordneten Pressen mit symmetrischen Pressengestellen reduziert.

Die unterschiedlich große und wechselnde Ständerweite erfordert, daß die der Presse 1.1, 1.3 und jeder übernächsten zugeordneten Schiebetische 12.1, 12.3 nach der in Teiletransportrichtung rechten Seite und die der Presse 1.2 und jeder übernächsten zugeordneten Schiebetische 12.2 nach der linken Seite zwecks Werkzeugwechsel in die Positionen 13.1-13.3 ausfahren.
Zwischen den ausgefahrenen Schiebetischen 12.1-12.3 befinden sich auf gleicher Ebene die mit neuen Werkzeugsätzen vorgerüsteten Schiebetische 14.1-14.3. Durch Verfahren der Schiebetische 12.1-12.3, 14.1-14.3 längs zur Teiletransportrichtung gelangen die ausgefahrenen Schiebetische 12.1-12.3 in die Umrüstpositionen und die Schiebetische 14.1-14.3 in die Positionen 13.1-13.3 zum Einfahren der neuen Werkzeugsätze in die Pressen 1.1-1.3

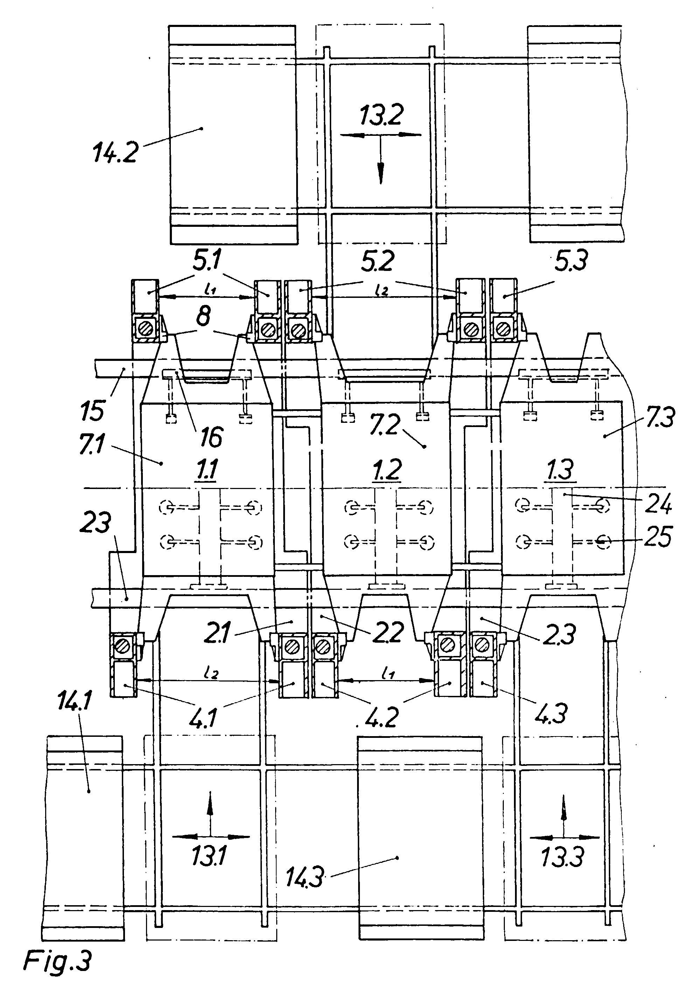

Zum Transport der Blechteile in bzw. aus der Transferpressenlinie sowie von einer Pressenstufe zur nächsten sind am Beispiel der Fig. 2 und 3 zwei durch alle Pressen 1.1-1.3 der Linie durchgehende Tragschienen 15, 23 vorgesehen, auf denen entweder mit teilespezifischen Greiferelementen bestückte Greiferleisten 16 (Fig. 3, obere Hälfte) oder die beiden Tragschienen 23 miteinander verbindende Saugertraversen 24 (Fig. 3, untere Hälfte) angeordnet sind. Die Bewegung der Tragschienen 15, 23 wird über ein in der Zeichnung nicht dargestelltes Kurvengetriebe bzw. Kurvenkoppelgetriebe vom Pressenantrieb eingeleitet.

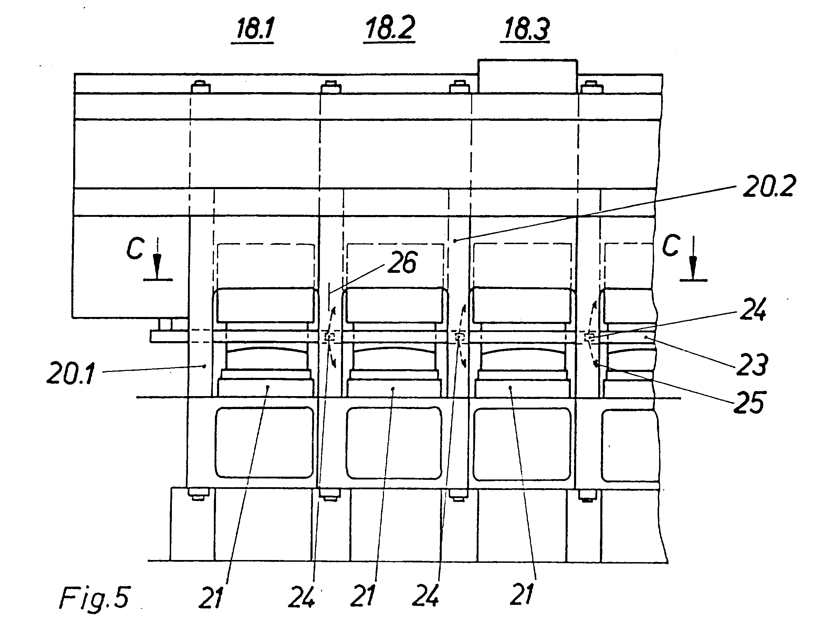

Die Saugertraversen 24 sind mit teilespezifischen Saugern oder Saugergruppen 25 versehen und führen während des Blechteiltransportes eine zweidimensionale Bewegung aus. Die Rücklaufbewegung wird durch eine Raststellung 26 (Fig. 5) zwischen den Werkzeugstufen während des Schließvorganges der Stößel 7.1-7.3 unterbrochen. Die Saugertraversen 24 werden bei der Bewegung in diese Raststellung 26 bedarfsweise um ihre Längsachse geschwenkt, wenn der Freiraum zwischen den Werkzeugen der benachbarten Pressen 18.1-18.3 kleiner ist als die maximale Ausdehnung der Saugertraversen 24 in der Arbeitsposition. Die Schwenkbewegung ist sowohl mit Hilfe des nachfolgend beschriebenen, jeder Saugertraverse zugeordneten separatem Schwenkmoduls der zur Lageorientierung dienenden Zusatzeinrichtung 17, als auch mittels eines gemeinsamen Kurvenantriebes für alle Saugertraversen realisierbar. Bei der Kombination beider Schwenkbewegungen werden die Bewegungen antriebsseitig überlagert.

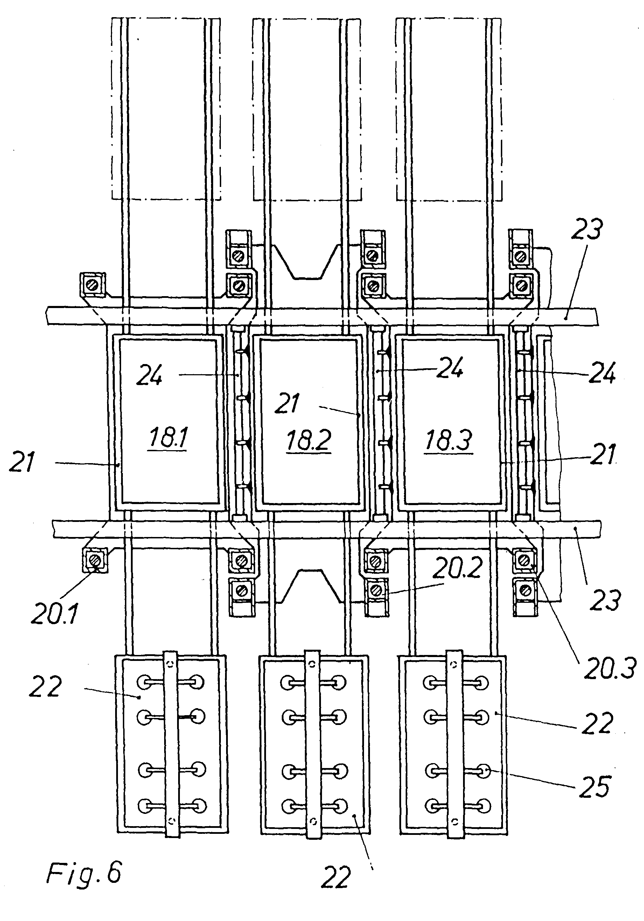

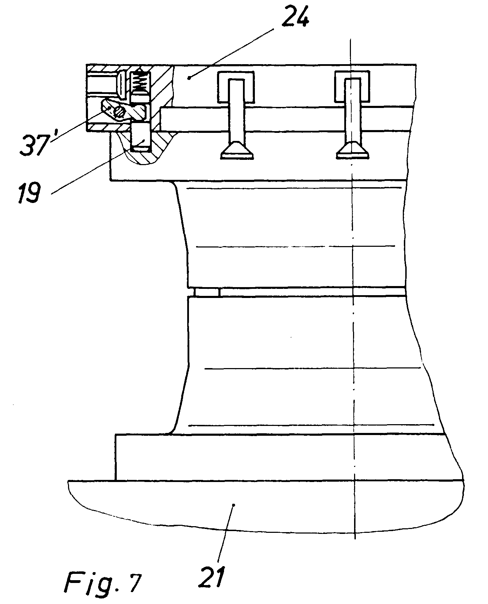

Beim Werkzeugwechsel werden die Saugertraversen 24 von den Tragschienen 23 abgekoppelt und auf der Oberseite der von den Stößeln 7.1-7.3 abgekoppelten Oberwerkzeuge abgelegt. Dazu enthalten die Saugertraversen 24 (Fig. 7) federvorgespannte Absteckbolzen 19, die in Öffnungen der Oberwerkzeuge bzw. Oberwerkzeugspannplatten arretiert werden.Im Absteckbolzen 19 ist das äußere Ende eines in der Saugertraverse 24 drehbar gelagerten Spannhebels 37 geführt.Durch Aufheben der Federkraft wird die Spannhebelarretierung der Kolbenstange 34 aufgehoben und durch Zurückziehen der Kolbenstange 34 die Verbindung von Saugertraverse 24 und Tragschiene 23 gelöst. Die abgekoppelten Saugertraversen 24 werden am Beispiel von Fig. 6 nach dem Anheben der Tragschienen 23 gemeinsam mit dem Werkzeugsatz auf dem Schiebetisch 21 nach der linken Seite aus dem Pressenraum ausgefahren und die bereits auf der rechten Pressenseite mit einem neuen Werkzeugsatz vorgerüsteten Schiebetische 22 fahren gemeinsam mit der zugehörigen Saugertraverse 24 in umgekehrter Reihenfolge wieder in den Pressenraum ein.

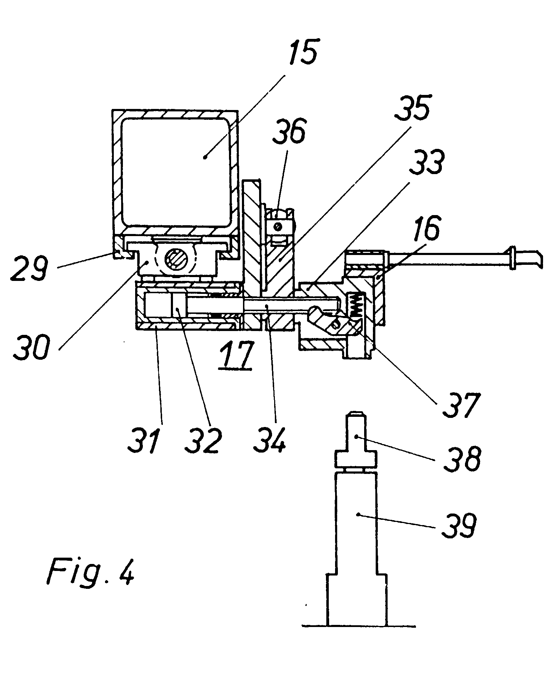

Zur Lageorientierung der Blechteile vor Eintrag in die Folgepresse ist bei Bedarf in den Koppelstellen der Greiferleisten 16 bzw. der Saugertraversen 24 an den Tragschienen 15, 23 jeweils eine Zusatzeinrichtung 17 vorgesehen (Fig. 4), durch die die Greiferleisten 16 bzw. Saugertraversen 24 jeder Pressenstufe mittels separater Stellantriebe unabhängig voneinander in mehreren Freiheitsgraden bewegbar mit den Tragschienen 15, 23 verbunden sind. Die Zusatzeinrichtung ist modular aufgebaut und läßt sich entsprechend den technologischen Erfordernissen für unterschiedliche Freiheitsgrade der Greiferleiste 16 bzw. Saugertraverse 24 ausrüsten. Nach Fig. 4 ist in einer unteren Führung 29 der Tragschiene 15 ein Längsschlitten 30 mittels eines Spindelantriebes für eine Zusatzbewegung längs der Teiletransportrichtung verschiebbar gelagert.Im Längsschlitten 30 ist die Führung eines Hubschlittens 31 integriert. Der Hubschlitten 31 enthält den Quermodul für eine Zusatzbewegung quer zur Teiletransportrichtung. Die im Quermodul integrierte Zylindereinheit 32 dient gleichzeitig zur Entarretierung der Greiferleistenaufnahme 33 bzw. einer Saugertraverse beim Umrüstvorgang, indem deren Kolben in die linke Rastposition fährt.Die Kolbenstange 34 ist im äußeren Bereich mit einer Keilprofilierung versehen, auf der ein Hebel 35 gelagert ist. Der Hebel 35 bewirkt als Schwenkmodul in Verbindung mit seiner Antriebs-Spindel-Kombination 36 eine Kippmöglichkeit der Greiferleiste 16 um die Achse quer zur Teiletransportrichtung.
Die Greiferleistenaufnahme 33 enthält neben der keilprofilierten Bohrung zur Aufnahme der Kolbenstange 34 einen Spannhebel 37, der mittels einer Feder die Kolbenstange 34 arretiert. Beim Werkzeugwechsel wird diese Spannhebelarretierung durch einen Mitnehmer 38, der mittels einer auf dem Schiebetisch 12.1-12.3 bzw. dem Werkzeug angeordneten Hubeinrichtung 39 mit der Greiferleistenaufnahme 33 wirkverbunden ist, unterbrochen.

Eine weitere vorteilhafte Ausgestaltung einer Transferpressenlinie ist in den Fig. 5 und 6 dargestellt. Im Unterschied zum ersten Ausführungsbeispiel sind bei der letztgenannten Ausführung (Fig. 5 und 6) die Ständerweiten längs zur Teiletransportrichtung aller modular in der Pressenlinie integrierten Pressen 18.1-18.3 gleich groß, so daß die Aus- bzw. Einfahrrichtung aller Schiebetische 21, 22 beim Werkzeugwechsel einheitlich jeweils nach links bzw. nach rechts realisierbar ist.

### Bezugszeichenliste

- 1.1 - 1.3: Presse (Fig. 1-3)
- 2.1 - 2.3: Pressentisch
- 3.1 - 3.3: Kopfstück
- 4.1 - 4.3: rechter Pressenständer
- 5.1 - 5.3: linker Pressenständer
- 6: Zuganker
- 7.1 - 7.3: Stößel
- 8: Stößelführung
- 10: Säule
- 11: Fundament
- 12.1 - 12.3: Schiebetisch
- 13.1 - 13.3: Pos. des Schiebetisches
- 14.1 - 14.3: vorgerüstete Schiebetische
- 15: Tragschiene
- 16: Greiferleiste
- 17: Zusatzeinrichtung
- 18.1 - 18.3: Presse (Fig. 5-7)
- 19: Absteckbolzen
- 20.1 - 20.3: Pressenständer
- 21: Schiebetisch
- 22: Schiebetisch
- 23: Tragschiene
- 24: Saugertraverse
- 25: Sauger bzw. Saugergruppe
- 26: Raststellung
- 29: Führung
- 30: Längsschlitten
- 31: Hubschlitten
- 32: Zylindereinheit
- 33: Greiferleistenaufnahme
- 34: Kolbenstange
- 35: Hebel
- 36: Antrieb-Spindel-Kombination
- 37: Spannhebel
- 38: Mitnehmer
- 39: Hubeinrichtung

## Patentansprüche

1. Transfereinrichtung zum Transport von großflächigen Blechteilen in einer Transferpressenlinie mit mehreren im geringen Abstand zueinander aufgestellten einzelnen Pressen (1.1-1.3, 18.1-18.3) denen jeweils nur eine Arbeitsstufe zugeordnet ist und die mittels Verbindungswellen mit einem gemeinsamen Antrieb verbunden sind sowie mit ausfahrbaren Schiebetischen (12.1-12.3, 21, 22) für jede Arbeitsstufe ausgerüstet sind, bestehend aus durch die gesamte Pressenlinie durchgehenden, mit Halteelementen verbundenen Tragschienen (15, 23) zum Zuführen und Entnehmen der Blechteile sowie zur schrittweisen Weitergabe derselben von einer Stufe zur nächsten und mit in den Koppelstellen zwischen den Halteelementen und den Tragschienen (15, 23) jeweils angeordneter, modular aufgebauter Zusatzeinrichtung (17) **dadurch gekennzeichnet,** daß die Zusatzeinrichtung mit separaten Stellantrieben zur Lageorientierung der Blechteile vor Eintrag in die Folgestufe versehen ist,
daß an der Zusatzeinrichtung (17) Saugertraversen (24) oder Greiferleisten (16) ankoppelbar sind und daß die Zusatzeinrichtung (17) mit Stellantrieben in bis zu vier Freiheitsgraden ausgebildet ist, derart, daß die Zusatzeinrichtung (17) einen in einer Führung (29) der Tragschiene (15,23) in Teiletransportrichtung verschiebbar gelagerten Längsschlitten (30), einen vertikal verschiebbar gelagerten Hubschlitten (31), einen im Hubschlitten (31) quer zur Teiletransportrichtung verschiebbar gelagerten Quermodul sowie einen am Hubschlitten (31) gelagerten Schwenkmodul oder mindestens einen von der Zahl der jeweils geforderten Freiheitsgrade abhängigen Teil der vorstehend genannten Baugruppen aufweist.

2. Transfereinrichtung nach Anspruch 1,
**dadurch gekennzeichnet,**
daß die Saugertraversen (24) in den Raststellungen zwischen den Werkzeugstufen im Ständerbereich der jeweils benachbarten Pressen (1.1-1.3, 18.1-18.3) um ihre Längsachse in eine vertikale Warteposition schwenkbar auf den Tragschienen (23) gelagert sind.

3. Transfereinrichtung nach Anspruch 1,
**dadurch gekennzeichnet,**
daß die Saugertraversen (24) beim Werkzeugwechsel von den Tragschienen (23) abkoppelbar und auf der Oberseite der von den Stößeln (7.1.-7.3) abgekoppelten und auf den Schiebetischen (12.1-12.3) abgelegten Oberwerkzeuge arretierbar und gemeinsam mit diesen aus dem Pressenraum ausfahrbar sind.

## Claims

1. Transfer device for transporting large-area sheet-metal parts in a transfer press line having a plurality of individual presses (1.1 - 1.3, 18.1 - 18.3) installed a slight distance apart from one another, with which in each case only one working stage is associated and which are connected by means of connecting shafts to a common drive and equipped with extendable sliding tables (12.1 - 12.3, 21, 22) for each working stage, comprising supporting rails (15, 23), which extend continuously through the entire press line and are connected to retaining elements, for feeding and removing the sheet-metal parts as well as for successively transferring the latter from one stage to the next and having a modular auxiliary device (17) disposed in each case in the coupling points between the retaining elements and the supporting rails (15, 23),
**characterized in**
that the auxiliary device is provided with separate actuating drives for positional orientation of the sheet-metal parts prior to entry into the next stage, that suction cross-members (24) or gripper rails (16) are connectable to the auxiliary device (17) and that the auxiliary device (17) is designed with actuating drives in up to four degrees of freedom, such that the auxiliary device (17) comprises a longitudinal slide (30) supported in a guide (29) of the supporting rail (15, 23) so as to be displaceable in parts transport direction, a lifting slide (31) supported in a vertically displaceable manner, a transverse module supported in the lifting slide (31) so as to be displaceable at right angles to the parts transport direction as well as a swivelling module supported on the lifting slide (31), or at least some of the previously described units depending on the number of degrees of freedom required in each case.

2. Transfer device according to claim 1,
**characterized in**
that the suction cross-members (24) in the detent positions between the die stages in the post region of the respective adjacent presses (1.1 - 1.3, 18.1 - 18.3) are supported on the supporting rails (23) so as to be capable of swivelling about their longitudinal axis into a vertical stand-by position.

3. Transfer device according to claim 1,
**characterized in**
that, upon die changing, the suction cross-members (24) are disconnectable from the supporting rails (23) and arrestable on the top of the upper dies, which have been disconnected from the rams (7.1 - 7.3) and deposited on the sliding tables (12. 1 - 12.3), and are removable jointly with said upper dies from the press area.

## Revendications

1. Dispositif de transfert destiné au transport de pièces de tôle de grande surface dans une ligne transfert de presses comprenant plusieurs presses individuelles (1.1-1.3, 18.1-18.3) implantées à faible distance les unes des autres, à chacune desquelles n'est affectée qu'une seule opération de travail, et qui sont reliées à un entraînement commun au moyen d'arbres de liaison, ainsi qu'équipées de tables coulissantes (12.1-12.3, 21, 22), extractibles, pour chaque opération de travail, le dispositif étant constitué de rails porteurs (15, 23) qui traversent en continu la totalité de la ligne de presses, sont reliés à des éléments de retenue, et sont destinés à l'amenée et à l'évacuation des pièces de tôle ainsi qu'à leur transfert pas à pas d'une opération à la suivante, le dispositif comprenant également, disposé à chacun des points de couplage entre les éléments de retenue et les rails porteurs (15, 23), un dispositif additionnel (17) de construction modulaire,
**caractérisé**
en ce que le dispositif additionnel est pourvu d'entraînements de déplacement séparés, pour l'orientation en position des pièces de tôle avant l'insertion dans l'étage de l'opération suivante, en ce qu'au dispositif additionnel (17) peuvent être couplées des traverses de têtes d'aspiration (24) ou des barres de préhension (16), et en ce que le dispositif additionnel (17) est équipé d'entraînements de déplacement dans un nombre de degrés de liberté pouvant aller jusqu'à quatre, de façon telle, que le dispositif additionnel (17) comporte un chariot longitudinal (30) monté coulissant dans la direction de transport des pièces, dans un guidage (29) du rail porteur (15, 23), un chariot de levage (31) monté de manière à pouvoir coulisser verticalement, un module transversal monté de manière à pouvoir coulisser transversalement à la direction de transport des pièces, dans le chariot de levage (31), ainsi qu'un module de pivotement monté sur le chariot de levage (31), ou au moins une partie des ensembles venant d'être cités, qui dépend du nombre des degrés de liberté exigé dans chaque cas considéré.

2. Dispositif de transfert selon la revendication 1, **caractérisé** en ce que les traverses de têtes d'aspiration (24), dans les positions d'arrêt entre les étages d'outils, dans la zone du montant des presses (1.1-1.3, 18.1-18.3) respectivement voisines, sont montées sur les rails porteurs (23) de manière à pouvoir pivoter autour de leur axe longitudinal, dans une position d'attente verticale.

3. Dispositif de transfert selon la revendication 1, **caractérisé** en ce que les traverses de têtes d'aspiration (24) peuvent, lors du changement d'outils, être désaccouplées des rails porteurs (23), et être bloquées sur le côté supérieur des outils supérieurs désaccouplés des coulisseaux (7.1-7.3) et déposés sur les tables coulissantes (12.1-12.3), et être évacuées en commun avec des outils supérieurs, de l'espace de la presse.
